# EUROPEAN PATENT SPECIFICATION

(11) **EP 1 081 360 B1**
(45) Date of publication and mention of the grant of the patent: **23.03.2005**
(21) Application number: 00118851.5
(22) Date of filing: 31.08.2000
(51) Int. Cl.: F02D 41/02, F01N 3/08, F01N 3/10

(54) **Apparatus and method for purifying exhaust gases in automotive engines**
Verfahren und Vorrichtung zum Reinigen von Abgasen von Kraftfahrzeugmotoren
Dispositif et méthode pour purifier les gaz d'échappement de moteurs d'automobiles

(30) Priority: 03.09.1999 JP 24997199
(43) Date of publication of application: 07.03.2001
(60) Divisional application: 03021300.3
(73) Proprietor: TOYOTA JIDOSHA KABUSHIKI KAISHA, Toyota-shi, Aichi-ken 471-8571 (JP)
(72) Inventor: Mashiki, Zenichiro, c/o Toyota Jidosha K. K., Toyota-shi, Aichi-ken 471-8571 (JP)
(74) Representative: Leson, Thomas Johannes Alois, Dipl.-Ing.

(56) References cited:
- No relevant documents disclosedNo relevant documents disclosed

## Description

The present invention relates to an apparatus and method for purifying exhaust gases in automotive engines, and more particularly, to an apparatus and method for purifying exhaust gases of engines that perform lean combustion with catalytic converters, which are located in exhaust passages.

Automotive engines that perform lean combustion, in which the air fuel ratio is set at a value that is greater than the stoichiometric air fuel ratio, improve fuel efficiency. There are various modes in lean combustion, such as stratified charge combustion, in which a layer of a rich air fuel mixture is formed in the vicinity of a spark plug, and lean homogeneous charge combustion, in which a layer of a homogeneous air fuel mixture is formed in a cylinder.

When lean combustion is performed, the temperature of the exhaust gas has a tendency to decrease in comparison to when stoichiometric combustion is performed, in which the air fuel ratio is stoichiometric, since the generated combustion heat is less. This tendency becomes stronger especially when performing stratified charge combustion, in which the generated combustion heat is less than that of lean homogeneous charge combustion. Therefore, for example, if the engine continues to run in a low load state when stratified charge combustion is being performed, the temperature of catalytic converters arranged in an exhaust passage to purify exhaust gases, such as a NOx storage reduction catalytic converter or a three way catalytic converter, decreases. This lowers the purification capability of the catalytic converters.

Accordingly, for example, Japanese Unexamined Patent Publication No. 10-47040 describes an apparatus that hinders temperature decrease of the catalyst by switching the combustion mode from stratified charge combustion to lean homogeneous charge combustion when a decrease in the temperature of the catalyst is detected during stratified charge combustion.

The inventor of the present invention has conducted experiments and confirmed that the catalyst temperature changes as described below when stratified charge combustion is performed if the vehicle shifts from a state in which it is not being driven to a state in which it is driven.

If the vehicle starts to run when stratified charge combustion is being performed, the generated combustion heat increases as the engine load (injected fuel amount) increases. However, the temperature of the walls in combustion chambers and the exhaust system is still low when the driver begins driving the vehicle. Thus, the increase in the combustion heat does not immediately increase the exhaust gas temperature. Further, when the vehicle starts to run, the increase in the engine load increases the intake air amount, which in turn increases the exhaust gas amount. As a result, immediately after the vehicle starts to run, a large amount of exhaust gas, the temperature of which is still low, flows into the catalytic converter and quickly cools the catalyst. Subsequently, the temperature of the combustion chambers and the exhaust system increases. As the temperature of the exhaust gas increases and exceeds the temperature of the catalyst, the catalyst temperature stops decreasing and starts to increase.

In this manner, the catalyst temperature is decreased quickly immediately after the vehicle starts running. Hence, if the combustion mode is switched when a decrease in the catalyst temperature is detected, a long period of time becomes necessary for the catalyst temperature to reach the temperature at which the predetermined purification capability can be obtained. The prior art exhaust gas purifying apparatus does not purify the exhaust gas immediately after the vehicle starts running since a large amount of exhaust gas flows into the catalyst when the catalyst's purification capability is decreased.

Further, in the prior art apparatus, for example, if the threshold temperature for determining the temperature decrease of the catalyst is set at a sufficiently high value, the problem of the catalyst temperature decrease when the vehicle starts running may be solved. However, this results in frequent switching of the combustion mode, which is intended to increase the catalyst temperature, even when not needed. Unnecessary switching of the combustion mode leads to a decrease in fuel efficiency.

It is an object of the present invention to provide an apparatus and method for purifying exhaust gases in automotive engines that produce a desirable exhaust emission even if the temperature of the catalyst decreases when the vehicle starts running.

According to the present invention an exhaust gas purifying apparatus as defined in claim 1 and a method for purifying exhaust gas as defined in claim 6 are provided. Therefore, the present invention provides an exhaust gas purifying apparatus applied to an automotive engine that performs lean combustion. The apparatus is installed in a vehicle to purify exhaust gas with a catalytic converter located in an exhaust passage of the engine. The apparatus includes a determining means for determining whether or not the vehicle has started to move, and a temperature increasing means for increasing the temperature of the catalytic converter when the determining means determines that the vehicle has started to move.

Other aspects and advantages of the present invention will become apparent from the following description, taken in conjunction with the accompanying drawings, illustrating by way of example the principles of the invention.

The invention, and preferred objects and advantages thereof, may best be understood by reference to the following description of the certain exemplifying embodiments together with the accompanying drawings in which:
Fig. 1 is a schematic diagram showing an engine and an exhaust gas purifying apparatus according to a first embodiment of the present invention;
Fig. 2 is a flowchart showing the procedure for setting a stoichiometric flag in the first embodiment;
Fig. 3 is a further flowchart of the procedure for setting the stoichiometric flag;
Fig. 4 is a graph showing the relationship between the total distance traveled by the vehicle relative to a lower threshold value T1 and an upper threshold value T2;
Fig. 5 is a flowchart showing the procedure for switching the combustion mode in the first embodiment;
Fig. 6 is a timing chart showing an example of how the combustion mode is switched in accordance with a temperature increase enhancement routine of the first embodiment;
Fig. 7 is a graph showing the relationship between the catalyst temperature and the upper storage amount of the NOx catalyst;
Fig. 8 is a flowchart showing the procedure for setting a rich combustion flag in a second embodiment according to the present invention;
Fig. 9 is a further flowchart of the procedure for setting the rich combustion flag;
Fig. 10 is a flowchart showing the procedure for switching the combustion mode in the second embodiment; and
Fig. 11 is a timing chart showing an example of how the combustion mode is switched in accordance with a NOx reduction routine of the second embodiment.

### [First Embodiment]

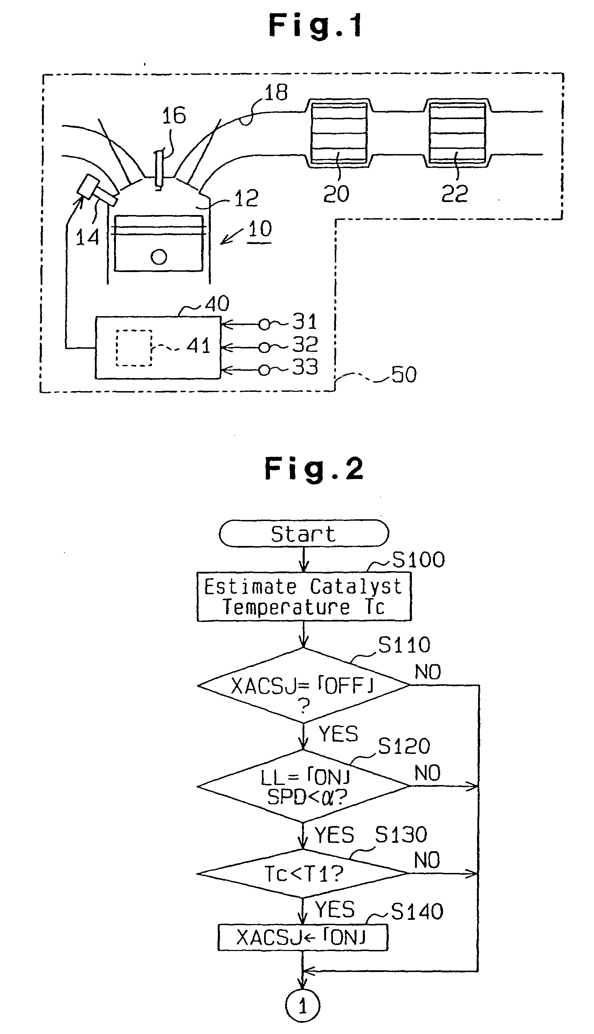

Fig. 1 is a schematic diagram showing an exhaust gas purifying apparatus according to a first embodiment of the present invention and an engine 10 to which the apparatus is connected.

The engine 10, which is installed in a vehicle 50, includes an injector 14, which injects fuel directly into a combustion chamber 12, and a spark plug 16, for igniting the injected fuel. In the engine 10 of the first embodiment, the fuel injection mode of the injector 14 is changed to switch the combustion mode between stratified charge combustion (lean combustion), stoichiometric combustion, and rich combustion.

For example, when stratified charge combustion is performed, fuel is injected during the latter half of the compression stroke. When ignition occurs, the air fuel mixture in the vicinity of the spark plug 16 is rich so that it can be ignited locally. The average air fuel ratio (A/F) of the air fuel mixture is set so that it is higher (e.g., A/F=25 to 50) and thus leaner than the stoichiometric air fuel ratio (A/F=14.5). When stoichiometric combustion is performed, fuel is injected during the suction stroke. Thus, the air fuel ratio in the combustion chamber 12 is homogeneous when ignition occurs. Further, the air fuel ratio is set so that it is approximate to the stoichiometric air fuel ratio.

The combustion mode is shifted between stratified charge combustion and stoichiometric combustion in accordance with the operating state of the engine 10, such as the engine load and the engine speed. The combustion mode is set so that stratified charge combustion is performed when the engine 10 is in a low load, low engine speed range, and stoichiometric combustion is performed when the engine 10 is in a high load, high engine speed range.

When rich combustion is performed, fuel is injected during the suction stroke like when stoichiometric combustion is performed. However, the amount of the injected fuel is increased. In this mode, the air fuel ratio is set so that it is lower (A/F=11 to 13) and thus richer than the stoichiometric combustion.

Rich combustion is performed when the NOx storage amount in a NOx storage reduction catalytic converter 22 (described later) exceeds a predetermined value (rich spike treatment) and when reducing NOx (described later).

An exhaust passage 18 is connected to the combustion chamber 12. A three way catalytic converter 20 and the NOx storage reduction catalytic converter (hereafter referred to as NOx catalytic converter) 22, which is located downstream from the three way catalytic converter 20, are arranged in the exhaust passage 18. The three way catalytic converter 20 and the NOx catalytic converter 22 purify exhaust gases by reducing or eliminating hydrocarbon (HC), carbon monoxide (CO), and nitrogen oxide (NOx) from the exhaust gases.

In the three way catalytic converter 20, oxidation reduction reaction takes place and purifies the exhaust gas by reducing or eliminating HC, CO, and NOx from the exhaust gas. The NOx catalytic converter 22 temporarily stores the NOx that is included in the exhaust gas when stratified charge combustion is performed. The stored NOx is reduced using HC and CO, which are included in the exhaust gas when rich combustion (or stoichiometric combustion) is performed, as a reduction agent.

An engine speed sensor 31, which detects the engine speed, an acceleration sensor 32, which detects the depressed amount of an acceleration pedal (not shown), and a speed sensor 33, which detects the traveling speed (vehicle speed SPD) of the vehicle 50, are installed in the vehicle 50. An electronic control unit (ECU) 40, which controls the engine 10, receives detection signals from the sensors 31-33. In addition to a signal corresponding to the depressed amount of the acceleration pedal, the acceleration sensor 32 provides the ECU 40 with a signal (full closure signal LL) that goes ON when the acceleration pedal is not depressed and goes OFF when the acceleration pedal is depressed.

Based on the operating state of the engine 10 and the traveling state of the vehicle, which are detected by the sensors 31-33, the ECU 40 executes various controls, such as fuel injection control, and control for preventing a decrease in the catalyst purification capability.

The ECU 40 is provided with a memory 41 which stores programs, calculation maps used to execute each type of control and various data calculated when executing the programs. For example, the memory 41 stores the total distance traveled by the vehicle 50 based on the detection signal of the speed sensor 33. The total travel distance of the vehicle 50 reflects the deterioration of the catalytic converters 20, 22 and is used by the ECU 40.

If the temperature of the three way catalytic converter 20 and the NOx catalytic converter 22 is determined to have decreased such that a decrease in the purification capability cannot be ignored, the exhaust gas purifying apparatus of this embodiment forcibly switches the combustion mode to stoichiometric combustion, which increases the temperature of the exhaust gas. The increased exhaust gas temperature increases the temperature of the catalytic converters 20, 22. In this manner, a process for hindering temperature decrease of the catalytic converters 20, 22 (temperature increase enhancement routine) is performed.

The temperature increase enhancement routine will now be described in detail with reference to Figs. 2 to 6.

In the temperature increase enhancement routine, when the vehicle is not moving, a flag (stoichiometric combustion flag XACSJ) for determining whether or not to switch the combustion mode is set based on the temperature of the catalytic converters 20, 22. When the vehicle starts to move, the combustion mode is forcibly switched to stoichiometric combustion if the stoichiometric combustion flag XACSJ is set at ON.

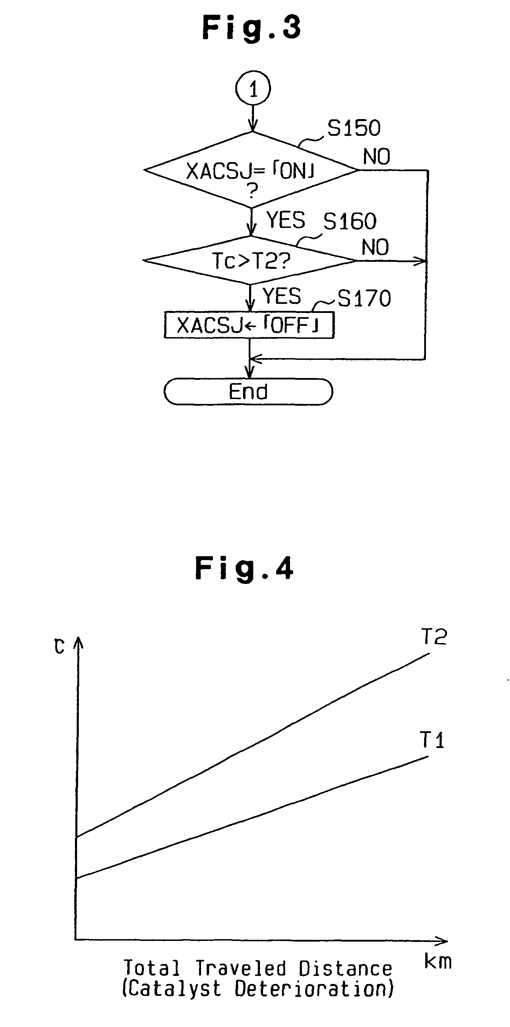

Figs. 2 and 3 are flowcharts showing the procedures for setting the stoichiometric combustion flag XACSJ. The ECU 40 executes the routine shown in the flowcharts using interrupts and in predetermined cycles based on the crank angle.

When entering the routine, at step 100 (Fig. 2), the ECU 40 first estimates the temperature of the three way catalytic converter 20 and the NOx catalytic converter 22 (catalyst temperature Tc) based on the engine operating state, such as the engine load and the engine speed, and the operating history of the engine 10 (e.g., if the rich spike treatment is performed, the elapsed time from when the treatment is initiated). The three way catalytic converter 20 is located upstream from the NOx catalytic converter 22 in the exhaust passage 18. Thus, it can be assumed that the temperature of the three way catalytic converter 20 is slightly higher than that of the NOx converter 22. However, in this routine, the temperatures of the catalytic converters 20, 22 are considered as being almost the same and are thus represented by catalyst temperature Tc.

The ECU 40 then proceeds to step 110 and determines whether the stoichiometric flag XACSJ is OFF. If the stoichiometric flag XACSJ is OFF, the ECU 40 proceeds to step 150, which is illustrated in Fig. 3.

If the stoichiometric flag XACSJ is OFF in step 110, the ECU 40 proceeds to step 120 and determines whether the full closure signal LL is ON and the vehicle speed SPD is lower than a predetermined speed α (e.g., 10km/h). That is, the ECU 40 determines whether the vehicle 50 is not moving. A state in which the vehicle is not moving includes a state in which the vehicle speed is extremely slow and the acceleration pedal is not depressed. In such state, it is assumed that the vehicle will soon stop.

If it is determined that the vehicle 50 is moving in step 120, the ECU 40 proceeds to step 150 of Fig. 3. If it is determined that the vehicle 50 is not moving in step 120, the ECU 40 proceeds to step 130 and compares the catalyst temperature Tc with a lower threshold value T1.

The lower threshold value T1, which is compared with the temperature of the converters 20, 22 when the vehicle 50 is not moving, is used to determine whether the temperature of the catalytic converters 20, 22 (catalyst temperature Tc) will decrease to a value at which the decrease in the purification capability cannot be ignored when the vehicle 50 starts to move.

The lower threshold value T1 is set in accordance with the total traveled distance of the vehicle 50. Fig. 4 illustrates the relationship between the lower threshold value T1 and the total traveled distance of the vehicle 50. As apparent from Fig. 4, the lower threshold value T1 is proportional to the total traveled distance of the vehicle 50. This is because the temperature at which the catalytic converters 20, 22 are activated increases as the total traveled distance of the vehicle 50 increases, that is, as the total usage time of the catalytic converters 20, 22 and thus deterioration of the catalytic converters 20, 22 increases. Thus, the catalytic converters 20, 22 must be heated to a higher temperature to obtain the desired purification capability. The relationship between the lower threshold value T1 and the total traveled distance is obtained experimentally and stored in the memory 41 of the ECU 40 as data for calculating the lower threshold value T1.

If the catalyst temperature Tc is lower than the lower threshold value T1 in step 130, the ECU 40 determines that the temperature of the catalytic converters 20, 22 will decrease when the vehicle 50 starts moving and thus cause a significant decrease in the purification capability of the catalytic converters 20, 22. In this case, the ECU 40 proceeds to step 140 and sets the stoichiometric flag XACSJ to ON.

If the catalyst temperature Tc is equal to or higher than T1 in step 130, the ECU 40 determines that the temperature of the catalytic converters 20, 22 will not decrease to a value that cannot be ignored when the vehicle 50 starts moving and proceeds to step 150 of Fig. 3. In this case, the stoichiometric flag XACSJ is not set at ON and the combustion mode is not forcibly switched.

After performing steps 100 to 140, the ECU 40 determines whether the stoichiometric flag XACSJ is ON in step 150. If the flag XACSJ is ON in step 150, the ECU 40 proceeds to step 160 and compares the catalyst temperature Tc with an upper threshold value T2.

The upper threshold value T2 is used to determine whether the catalytic converters 20, 22 have the desired purification capability from the temperature of the catalytic converters 20, 22 (catalyst temperature Tc) and set at a temperature that is higher than the lower threshold value (T2>T1).

In the same manner as the lower threshold value T1, the upper threshold value T2 is set in accordance with the total traveled distance of the vehicle 50. That is, as shown in Fig. 4, the upper threshold value T2 increases as the total traveled distance of the vehicle 50 increases. This is because, like the relationship between the lower threshold value T1 and the total traveled distance of the vehicle 50, the desired purification capability of the catalytic converters 20, 22 cannot be obtained unless the catalytic converters 20, 22 are heated to a higher temperature as the total traveled distance and thus deterioration of the catalytic converters 20, 22 increases. The relationship between the upper threshold value T2 and the total traveled distance is obtained experimentally and stored in the memory 41 of the ECU 40 as data for calculating the upper threshold value T2.

If the catalyst temperature Tc exceeds the upper threshold value T2 in step 160, the ECU 40 determines that the desired purification capability is obtained by the catalytic converters 20, 22 and temperature increase does not have to be enhanced by switching the combustion mode. The ECU 40 thus proceeds to step 170 and sets the stoichiometric flag XACSJ to OFF. The routine is temporarily terminated if the flag XACSJ has been set to off in step 170, if the flag XACSJ is not set at ON in step 150, or if the catalyst temperature Tc is less than or equal to the upper threshold value T2 in step 160.

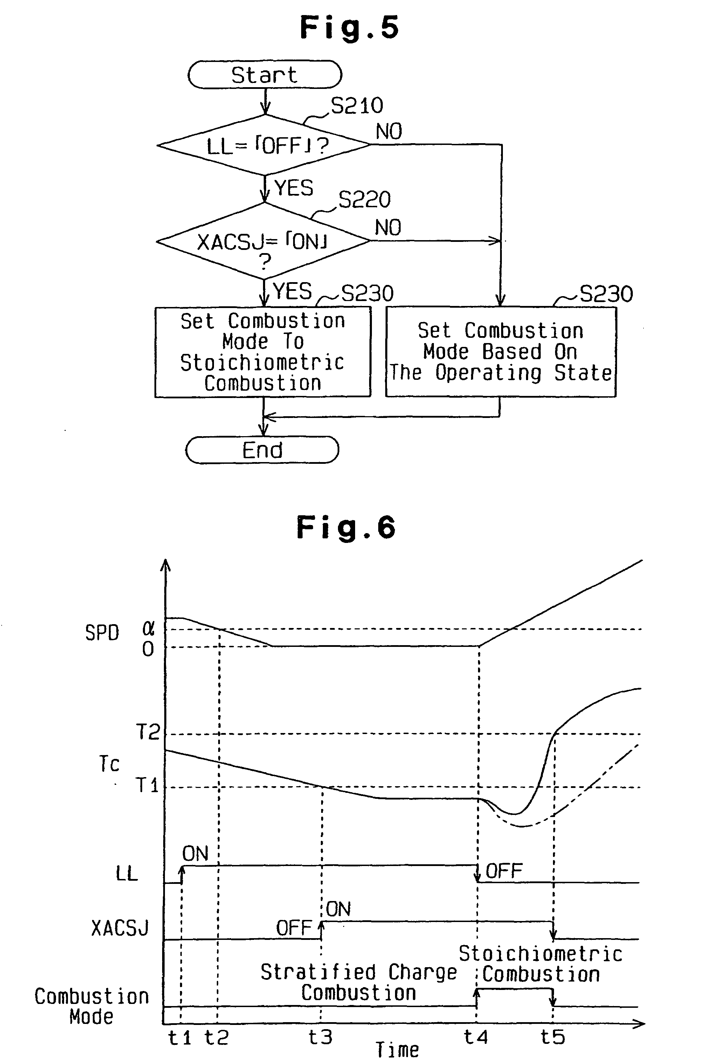

The procedures for switching the combustion mode in accordance with the stoichiometric flag XACSJ will now be discussed with reference to the flowchart of Fig. 5. The ECU 40 executes the routine shown in the flowchart using interrupts and in predetermined cycles based on the crank angle.

When entering the routine, at step 210, the ECU 40 first determines whether or not the full closure signal LL is OFF, that is, whether the acceleration pedal has been depressed to start moving the vehicle 50. If it is determined that the full closure signal LL is OFF in step 210, the ECU 40 proceeds to step 220 and determines whether or not the stoichiometric flag XACSJ is ON.

If the ECU 40 determines that the stoichiometric flag XACSJ is ON in step 220, the temperature of the catalytic converters 20, 22 will decrease to a value at which the desired purification capability cannot be obtained when the vehicle 50 starts to move. The ECU 40 thus proceeds to step 230 and forcibly sets the combustion mode to stoichiometric combustion.

If the full closure signal LL is ON in step 210 or if the stoichiometric flag XACSJ is OFF in step 220, the ECU 40 proceeds to step 240 and sets the combustion mode in accordance with the operating state of the engine 10.

After the combustion mode is set in step 230 or 240, the routine is temporarily terminated.

Fig. 6 is a timing chart showing one example of how the combustion mode is switched in accordance with the temperature increase enhancement routine.

As shown in Fig. 6, when stratified charge combustion is performed, if the acceleration pedal is released and thus not depressed (the full closure signal LL going ON) (time t1), the vehicle speed SPD becomes lower than the predetermined speed α (time t2), and the catalyst temperature Tc becomes lower than the lower threshold value T1 (time t3), the stoichiometric flag XACSJ is set at ON. However, even if the flag XACSJ is set at ON, the combustion mode is maintained in the mode corresponding to the operating state of the engine 10 (stratified charge combustion) until the vehicle 50 starts to move (time t3 to t4).

Subsequently, when the acceleration pedal is depressed (the full closure signal LL going OFF) and the vehicle 50 starts to move, the combustion mode is switched from stratified charge combustion to stoichiometric combustion (time t4).

The temperature of the exhaust gas increases when the combustion mode is switched from stratified charge combustion to stoichiometric combustion. The increase in the temperature of the catalytic converters 20, 22 (catalyst temperature Tc) is expedited (time t4 to t5) and maintained at a higher temperature in comparison to when stratified charge combustion is continued (as shown by the broken line representing the catalyst temperature Tc). As a result, the purification capability of the catalytic converters 20, 22 remains satisfactory even immediately after the vehicle 50 starts running. The three way catalytic converter 20 especially hinders emission of unburned components (HC and CO) resulting from temperature decrease when the vehicle 50 starts to move.

Continuous stoichiometric combustion increases the catalyst temperature Tc. When the catalyst temperature Tc reaches the upper threshold value T2, the flag XACSJ is set to OFF. This returns the combustion mode to the mode corresponding to the operating state of the engine 10 (stratified charge combustion) from stoichiometric combustion (time t5).

The advantages of the exhaust gas purifying apparatus of the first embodiment will now be discussed.
(1) The exhaust gas purifying apparatus determines when the vehicle 50 starts to move and enhances catalyst temperature increase by switching the combustion mode to stoichiometric combustion when the vehicle 50 starts to move. This hinders a temperature decrease of the catalytic converters 20, 22 immediately after the vehicle 50 starts to move and expedites temperature increase of the catalytic converters 20, 22. Accordingly, the purification capability of the catalytic converters 20, 22 is maintained at a satisfactory level and undesirable exhaust emissions are not discharged when the vehicle 50 starts moving.
(2) The exhaust gas purifying apparatus switches combustion modes under the condition that the catalyst temperature Tc when the vehicle 50 is not moving is lower than the lower threshold value T1. Thus, if there is no possibility of the catalyst purification capability being decreased, the combustion mode is not switched and the temperature of the catalytic converters 20, 22 is not forcibly increased even when the temperature of the catalytic converters 20, 22 decreases immediately after the vehicle 50 starts to move. This avoids unnecessary temperature increases of the catalytic converters 20, 22 and prevents the fuel efficiency from being lowered by performing unnecessary stoichiometric combustion.
(3) The exhaust gas purifying apparatus sets the period (temperature increasing period) during which the combustion mode is switched to stoichiometric combustion to enhance temperature increase of the catalytic converters 20, 22 in accordance with the deterioration of the catalytic converters 20, 22. Thus, even if the temperature for obtaining the desired purification capability changes due to deterioration, the catalyst temperature increase is enhanced in accordance with such change. This further hinders the discharge of undesirable exhaust emissions when the vehicle 50 starts moving.
(4) The deterioration of the catalytic converters 20, 22 is determined based on the total traveled distance of the vehicle 50. Thus, deterioration is easily determined. This functions to further hinder the discharge of undesirable exhaust emissions when the vehicle 50 starts moving.
(5) The exhaust gas purifying apparatus increases the exhaust gas temperature by forcibly switching the combustion mode from stratified charge combustion (lean combustion) to stoichiometric combustion. Accordingly, for example, a separate temperature increasing mechanism need not be provided for the exhaust gas purifying apparatus to increase the temperature of the catalytic converters 20, 22. Thus, the structure of the apparatus is simple.

### [Second Embodiment]

A second embodiment according to the present invention will now be described. Description will center on parts differing from the first embodiment.

As described above, the desired purifying capability of the three way catalytic converter 20 and the NOx catalytic converter 22 cannot be obtained if the temperature of the catalytic converters 20, 22 is lower than the catalyst activating temperature. However, the desired purifying capability of, especially, the NOx catalytic converter 22 decreases when the temperature decreases due to the reasons described below.

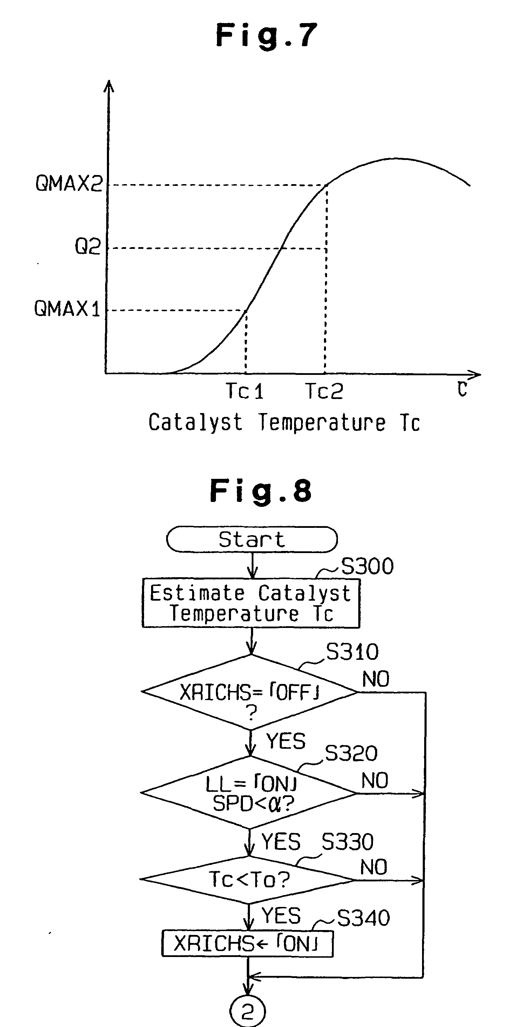

The NOx catalytic converter 22 temporarily stores the NOx included in the exhaust gas when stratified charge combustion is performed. However, the maximum value of the storage amount (hereafter referred to as maximum storage amount) is not constant and changes in accordance with the temperature of the catalytic converter 22 (catalyst temperature Tc) as shown in Fig. 7. In the graph of Fig. 7, for example, when the catalyst temperature Tc is TC2, the NOx maximum storage amount is QMAX2. If the catalyst temperature Tc decreases to Tc1, the maximum NOx storage amount Q2 decreases to QMAX1. If the required storage amount is Q2, it is lower than the maximum storage amount QMAX2 when the catalyst temperature is Tc2 but higher than the maximum storage amount QMAX1 when the catalyst temperature is Tc1. Thus, the excessive amount at temperature Tc1 (Q2-QMAX1) is not stored by the NOx catalytic converter 22 and is emitted from the NOx catalytic converter without being reduced. In such state, the purification capability of the catalytic converter 22 is decreased.

To avoid such NOx emission caused by temperature decrease, the exhaust gas purification apparatus of the second embodiment forcibly switches the combustion mode to rich combustion when the vehicle 50 starts moving, at which time the catalyst temperature Tc decreases rapidly. This reduces the NOx stored by the NOx catalytic converter 22 before emission.

A NOx reduction routine will now be described with reference to Figs. 8 to 11.

In the NOx reduction routine, when the vehicle 50 is not moving, a flag (rich combustion flag XRICHS) for determining whether or not to switch the combustion mode is set based on the temperature of the NOx catalytic converter 22. If the rich combustion flag XRICHS is ON when the vehicle 50 starts to move, the combustion mode is forcibly switched to rich combustion.

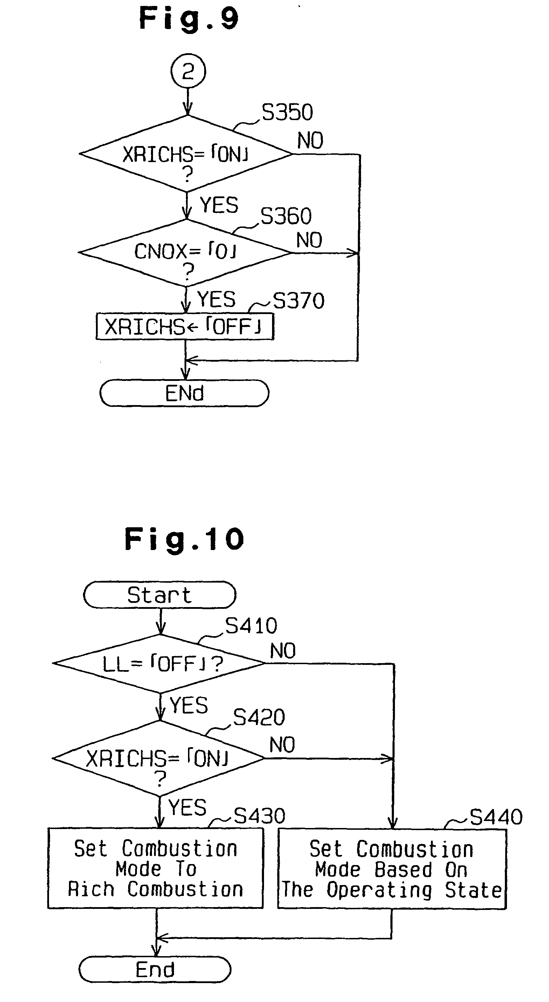

Figs. 8 and 9 are flowcharts show the procedures for setting the rich combustion flag XRICHS. The ECU 40 executes the routine shown in the flowcharts using interrupts and in predetermined cycles based on the crank angle.

When entering the routine, at step 300, the ECU 40 first estimates the catalyst temperature Tc in the same manner as step 100 of Fig. 2.

Then, the ECU 40 proceeds to step 310 and determines whether or not the rich combustion flag XRICHS is OFF. If the flag XRICHS is ON, the ECU 40 proceeds to step 350, which is shown in Fig. 9.

If the flag XRICHS is OFF in step 310, the ECU 40 proceeds to step 320 and determines whether or not the full closure signal LL is ON and the vehicle speed SPD is lower than a predetermined speed α. In other words, the ECU 40 determines whether the vehicle 50 is not moving in the same manner as step 120 of Fig. 2.

If the vehicle 50 is moving in step 320, the ECU 40 proceeds to step 350 of Fig. 9. If the vehicle is not moving in step 320, the ECU 40 proceeds to step 330 and compares the catalyst temperature Tc with a predetermined threshold value T0.

The threshold value T0, which is compared with the temperature of the NOx catalytic converter 22 when the vehicle 50 is not moving, is used to determine whether the temperature of the NOx catalytic converter 22 (catalyst temperature Tc) will decrease to a value at which the decrease in the maximum storage amount cannot be ignored when the vehicle 50 starts to move.

If the ECU 40 determines that the catalyst temperature Tc is lower than the threshold value T0 in step 330, the NOx catalytic converter 22 will decrease when the vehicle 50 starts to move. This significantly decreases the maximum storage amount to a level that cannot be ignored. Therefore, in this case, the ECU 40 proceeds to step 340 and sets the rich combustion flag XRICHS to ON.

If the catalyst temperature Tc is greater than or equal to the threshold value T0 in step 330, the ECU 40 determines that the maximum storage amount of the NOx will not decrease significantly even if the temperature of the NOx catalytic converter 22 decreases when the vehicle 50 starts to move and proceeds to step 350 of Fig. 9. In this case, the rich combustion flag XRICHS is not set at ON and the combustion mode is thus not forcibly switched.

At step 350, the ECU 40 determines whether the rich combustion flag XRICHS has been set to ON through steps 300 to 340. If the rich combustion flag XRICHS is ON, the ECU 40 proceeds to step 360 and determines whether or not a NOx counter value CNOX is set at zero.

The NOx counter value CNOX indicates the amount of actual storage in the NOx catalytic converter 22. Further the counter value CNOX is increased and decreased separately from this routine in accordance with the engine operating state, such as the engine load and the engine speed.

For example, since the amount of NOx in the exhaust gas increases when stratified charge combustion is performed, the NOx counter value CNOX is increased by a predetermined value in an incremental manner. The predetermined value is set in accordance with the engine operating state. Since the amount of HC and CO in the exhaust gas increases when rich combustion is performed and the amount of NOx in the NOx catalytic converter 22 is reduced using the HC and CO as a reduction agents, the NOx counter value CNOX is decreased by a predetermined value, which is set in accordance with the engine operating state, in an decremental manner.

Therefore, the actual amount of NOx in the NOx catalytic converter 22 decreases as the NOx counter value CNOX decreases. For example, if the NOx counter value CNOX is set at zero, all of the NOx is reduced in the NOx catalytic converter 22.

If the NOx counter value CNOX is zero in step 360, there is no NOx in the NOx catalytic converter 22 and the combustion mode does not have to be switched to reduce the NOx. Thus, the ECU 40 proceeds to step 370 and sets the rich combustion flag XRICHS to OFF. The routine is temporarily terminated if the rich combustion flag XRICHS has been set to OFF in step 370, if the rich combustion flag XRICHS is not set at ON in step 350, or if the NOx counter value CNOX is not zero in step 360.

The procedures for switching the combustion mode in accordance with the rich combustion flag XRICHS will now be discussed with reference to the flowchart of Fig. 10. The ECU 40 executes the routine shown in the flowchart using interrupts and in predetermined cycles based on the crank angle.

When entering the routine, at step 410, the ECU 40 first determines whether or not the full closure signal LL is OFF, that is, whether the acceleration pedal has been depressed to start moving the vehicle 50. If it is determined that the full closure signal LL is OFF in step 410, the ECU 40 proceeds to step 420 and determines whether or not the rich combustion flag XRICHS is ON.

If the ECU 40 determines that the rich combustion mode XRICHS is OFF in step 420, the temperature of the NOx catalytic converter 22 will decrease to a value at which the maximum storage amount decreases significantly when the vehicle 50 starts to move. The ECU 40 thus proceeds to step 430 and forcibly sets the combustion mode to rich combustion.

If the full closure signal LL is ON in step 410 or if the rich combustion flag XRICHS is OFF in step 420, forcible switching of the combustion mode is not performed. The ECU 40 thus proceeds to step 440 and sets the combustion mode in accordance with the operating state of the engine 10, such as the engine load and the engine speed. After the combustion mode is set in step 430 or 440, the routine is temporarily terminated.

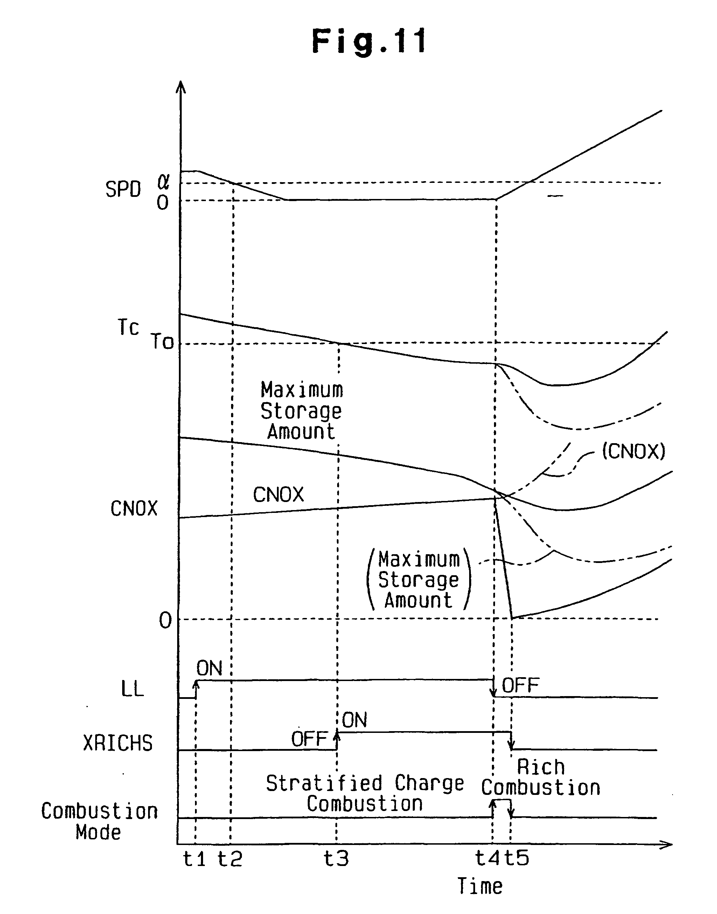

Fig. 11 is a timing chart showing one example of how the combustion mode is switched in accordance with the NOx reduction routine.

As shown in Fig. 11, when stratified charge combustion (lean combustion) is performed, if the acceleration pedal is released and thus not depressed (the full closure signal LL going ON) (time t1), the vehicle speed SPD becomes lower than the predetermined speed α (time t2), and the catalyst temperature Tc becomes lower than the threshold value T0 (time T3), the rich combustion flag XRICHS is set at ON. However, even if the rich combustion flag XRICHS is set at ON, the combustion mode is maintained in the mode corresponding to the operating state of the engine 10 (stratified charge combustion) until the vehicle 50 starts to move (time t3 to t4).

Subsequently, when the acceleration pedal is depressed (the full closure signal LL going OFF) and the vehicle 50 starts to move, the combustion mode is switched from stratified charge combustion to rich combustion (time t4).

The amount of HC and CO included in the exhaust gas increases when the combustion mode is switched from stratified charge combustion to rich combustion. These unburned components are supplied to the NOx catalytic converter 22 as a reduction agent. Thus, the amount of NOx discharged from the catalytic converter 22 increases. As a result, the actual NOx amount (NOx counter value CNOX) in the NOx catalytic converter 22 decreases significantly in comparison to when stratified charge combustion is continued (as shown by the broken lines representing the catalyst temperature Tc, the maximum storage amount of the NOx catalytic converter 22, and the NOx counter value CNOX). As a result, non-reduced NOx is not emitted from the NOx catalytic converter 22 even if the catalyst temperature Tc decreases immediately after the vehicle 50 starts to move.

The switching of the combustion mode decreases the amount of NOx in the NOx catalytic converter 22. When the NOx counter value CNOX decreases to zero, the rich combustion flag XRICHS is set to OFF. This returns the combustion mode to the mode corresponding to the operating state of the engine 10 (stratified charge combustion) from rich combustion (time t5).

The combustion mode is switched during the period from when the vehicle 50 starts to move subsequent to the catalyst temperature Tc falling below the lower threshold value T1 to when the catalyst temperature Tc reaches the upper threshold value T2. Accordingly, the period during which stoichiometric combustion is performed, that is, the period during which the combustion mode switch enhances the temperature increase of the catalytic converters 20,22 (time t4 to t5), is determined by the threshold values T1, T2. The threshold values T1, T2 are set in accordance with the deterioration of the catalytic converters 20, 22. Thus, deterioration of the catalytic converters 20, 22 is considered when setting the temperature increase period.

The exhaust gas purifying apparatus of the second embodiment has the advantages described below.
(6) The exhaust gas purifying apparatus of the second embodiment determines when the vehicle 50 starts to move, switches the combustion mode to rich combustion when the vehicle 50 starts to move, and supplies the NOx catalytic converter 22 with the HC and CO included in the exhaust gas to reduce and discharge the NOx included in the NOx catalytic converter 22. Thus, the emission of non-reduced NOx from the NOx catalytic converter 22 is avoided even when the temperature of the NOx catalytic converter 22 decreases immediately after the vehicle 50 starts to move. Thus, the emission of undesirable exhaust gases due to such temperature decrease is prevented.
(7) The exhaust gas purifying apparatus of the second embodiment switches the combustion mode under the condition that the catalyst temperature Tc is lower than the threshold value T0 when the vehicle 50 is not moving. Thus, if there is no possibility of a significant decrease in the maximum storage amount even if the temperature of the NOx catalytic converter 22 decreases immediately after the vehicle 50 starts to move, the combustion mode is not switched and the reduction agent is not supplied. This inhibits the supply of unnecessary reduction agent to the NOx catalytic converter 22 and prevents the fuel efficiency from decreasing due to unnecessary rich combustion.
(8) The exhaust gas purifying apparatus of the second embodiment switches the combustion mode from stratified charge combustion (lean combustion) to rich combustion. This supplies the NOx catalytic converter 22 with the increased unburned components (HC and CO) included in the exhaust gas as a reduction agent. Thus, a separate reduction agent supplying mechanism need not be provided for the exhaust gas purifying apparatus. This prevents the structure of the exhaust gas purifying apparatus from being complicated.

It should be apparent to those skilled in the art that the present invention may be embodied in many other specific forms. Particularly, it should be understood that the present invention may be embodied in the following forms.

In the first embodiment, instead of switching the combustion mode from stratified charge combustion to stoichiometric combustion, the combustion mode may be switched to other modes, such as lean homogeneous charge combustion or rich combustion, a combustion mode in which the stratification strength is weaker than that of stratified charge combustion (semi-stratified charge combustion), or a combustion mode in which the exhaust temperature is higher than that of stratified charge combustion. Further, in accordance with the catalyst temperature Tc when the vehicle 50 is not moving, the combustion mode may be switched to one of lean homogeneous charge combustion, rich combustion, and semi-stratified charge combustion. Alternatively, instead of switching the combustion mode, the temperature increase of the catalytic converters 20, 22 may be enhanced by, for example, retarding the ignition timing of the spark plug 16. To weaken the stratification strength, for example, the fuel injection timing may be advanced from the latter half of the compression stroke or part of the fuel may be injected during the suction stroke in addition to the compression stroke.

In the first embodiment, instead of setting a condition for the catalyst temperature Tc when the vehicle 50 is not moving, the combustion mode may always be switched from stratified charge combustion to stoichiometric combustion for a predetermined period when the vehicle 50 starts to move.

In the first embodiment, the threshold values T1, T2 may be set in a variable manner in accordance with a parameter other than the total traveled distance of the vehicle 50 (e.g., the total operational time of the engine 10). Alternatively, the threshold values T1, T2 may be fixed values.

In the second embodiment, the combustion mode may be switched, for example, under the condition that the NOx storage amount is equal to or greater than a predetermined amount (the NOx counter value CNOX being equal to or greater than a predetermined value) when the vehicle 50 is not moving. Alternatively, the combustion mode may be switched under the condition that the difference between the maximum storage amount of the NOx catalytic converter 22, which is obtained from the catalyst temperature Tc, and the actual storage amount is equal to or less than a predetermined amount when the vehicle 50 is not moving. As another option, the combustion mode may always be switched to rich combustion for a predetermined period when the vehicle 50 starts to move without setting such conditions.

In the second embodiment, the period during which the combustion mode is switched to rich combustion may be set, for example, in accordance with the catalyst temperature Tc.

In the second embodiment, for example, the HC produced when heating the fuel in the fuel tank may be supplied to the portion of the exhaust passage 18 upstream from the NOx catalytic converter 22.

In the second embodiment, the temperature increase of both catalytic converters 20, 22 may be enhanced by performing stoichiometric combustion for a predetermined time period after rich combustion if the decrease of the catalyst temperature Tc is large when the vehicle 50 is not moving. This maintains the capability for eliminating HC from the exhaust gas with the three way catalytic converter 20 and the capability of storing the NOx with the NOx catalytic converter 22 at satisfactory levels.

In each of the above embodiments, an exhaust gas temperature sensor may be arranged in the exhaust passage 18 to detect the temperature of the exhaust gas in the exhaust passage 18 and estimate the catalyst temperature Tc.

The exhaust gas purifying apparatus according to the present invention may be applied to an engine that performs lean homogeneous charge combustion or semi-stratified charge combustion.

The exhaust gas purifying apparatus according to the present invention may be applied to an engine which injects fuel into an intake port.

The present examples and embodiments are to be considered as illustrative and not restrictive.

An exhaust gas purifying apparatus for vehicles having engines that perform lean combustion and purify exhaust gas with a catalytic converter (20) located in an exhaust passage includes a determining means (40) to determine whether the vehicle is moving and a temperature increasing means (40) that increases a temperature of the catalytic converter when the vehicle begins to move. The temperature increasing means increases the temperature of the catalytic converter by switching the combustion mode of the engine from lean combustion to stoichiometric combustion.

## Claims

1. An exhaust gas purifying apparatus applied to an automotive engine (10) that performs lean combustion is installed in a vehicle (50), to purify exhaust gas with a catalytic converter (20, 22) located in an exhaust passage (18) of the engine (10), the apparatus being **characterized by:**
a determining means (40) for determining whether or not the vehicle (50) has started to move; and
a temperature increasing means (40) for increasing the temperature of the catalytic converter (20, 22) when the determining means (40) determines that the vehicle (50) has started to move.

2. The exhaust gas purifying apparatus according to claim 1, **characterized in that** the temperature increasing means (40) increases the temperature of the catalytic converter (20, 22) when the vehicle (50) starts to move under the condition that the temperature of the catalytic converter (20, 22) is lower than a predetermined temperature (S130, S330).

3. The exhaust gas purifying apparatus according to any one of the preceding claims, **characterized in that** the temperature increasing means (40) determines deterioration of the catalytic converter (20, 22) and sets a temperature increasing period, during which the temperature of the catalytic converter (20, 22) is increased, in accordance with the deterioration.

4. The exhaust gas purifying apparatus according to claim 3, **characterized in that** the temperature increasing means (40) determines the deterioration of the catalytic converter (20, 22) based on a total traveled distance of the vehicle (50).

5. The exhaust gas purifying apparatus according to any one of the preceding claims, **characterized in that** the temperature increasing means (40) increases the temperature of the catalytic converter (20, 22) by switching a combustion mode of the engine (10) from lean combustion to stoichiometric combustion (S230).

6. A method for purifying exhaust gas produced'by an automotive engine (10) that performs lean combustion with a catalytic converter (20, 22) located in an exhaust passage (18) of the engine (10), the method being **characterized by** the steps of:
determining whether or not the vehicle (50) has started to move; and
increasing the temperature of the catalytic converter (20, 22) when the vehicle (50) is determined to have started to move in the determining step.

## Patentansprüche

1. Abgasreinigungsgerät, das auf einen Verbrennungsmotor (10), der eine magere Verbrennung ausführt, angewandt wird, wobei dieses in ein Fahrzeug (50) eingebaut ist, um Abgas mit einem katalytischen Wandler (20, 22) zu reinigen, der sich in einem Auslasskanal (18) des Verbrennungsmotors (10) befindet, wobei das Gerät **gekennzeichnet ist durch**
eine Bestimmungseinrichtung (40) zum Bestimmen, ob das Fahrzeug (50) angefangen hat, sich in Bewegung zu setzen oder nicht; und
eine Temperaturerhöhungseinrichtung (40) zum Erhöhen der Temperatur des katalytischen Wandlers (20, 22), wenn die Bestimmungseinrichtung (40) bestimmt, dass das Fahrzeug (50) angefangen hat, sich in Bewegung zu setzen.

2. Abgasreinigungsgerät gemäß Anspruch 1 **dadurch gekennzeichnet, dass** die Temperaturerhöhungseinrichtung (40) die Temperatur des katalytischen Wandlers (20, 22) erhöht, wenn das Fahrzeug (50) anfängt, sich in Bewegung zu setzen, vorausgesetzt, dass die Temperatur des katalytischen Wandlers (20, 22) niedriger als eine vorbestimmte Temperatur (S130, S330) ist.

3. Abgasreinigungsgerät gemäß einem der vorhergehenden Ansprüche **dadurch gekennzeichnet, dass** die Temperaturerhöhungsreinrichtung (40) eine Verschlechterung des katalytischen Wandlers (20, 22) bestimmt, und eine Temperaturerhöhungszeitspanne festsetzt, während der die Temperatur des katalytischen Wandlers (20, 22) in Übereinstimmung mit der Verschlechterung erhöht wird.

4. Abgasreinigungsgerät gemäß Anspruch 3 **dadurch gekennzeichnet, dass** die Temperaturerhöhungseinrichtung (40) die Verschlechterung des katalytischen Wandlers (20, 22) auf der Grundlage der vom Fahrzeug (50) insgesamt gefahrenen Strecke bestimmt.

5. Abgasreinigungsgerät gemäß einem der vorhergehenden Ansprüche **dadurch gekennzeichnet, dass** die Temperaturerhöhungseinrichtung (40) die Temperatur des katalytischen Wandlers (20, 22) durch Umstellen eines Verbrennungsmodus des Verbrennungsmotors (10) von einer mageren Verbrennung zu einer stöchiometrischen Verbrennung (S230) erhöht.

6. Verfahren zum Reinigen von Abgas, das von einem Verbrennungsmotor (10) erzeugt wird, der eine magere Verbrennung ausführt, mit einem katalytischen Wandler (20, 22), der sich in einem Auslasskanal (18) des Verbrennungsmotors (10) befindet, wobei das Verfahren durch die folgenden Schritte **gekennzeichnet** ist:
Bestimmen, ob das Fahrzeug (50) angefangen hat, sich in Bewegung zu setzen oder nicht; und
Erhöhen der Temperatur des katalytischen Wandlers (20, 22), wenn bei dem Bestimmungsschritt bestimmt wird, dass das Fahrzeug (50) angefangen hat, sich in Bewegung zu setzen.

## Revendications

1. Dispositif d'épuration des gaz d'échappement appliqué à un moteur d'automobile (10) qui effectue la combustion pauvre est installé dans un véhicule (50), pour épurer les gaz d'échappement avec un pot catalytique (20, 22) placé dans un passage d'échappement (18) du moteur (10), le dispositif étant **caractérisé par :**
un moyen de détermination (40) pour déterminer si oui ou non le véhicule (50) a commencé à se déplacer ; et
un moyen d'augmentation de température (40) pour augmenter la température du pot catalytique (20, 22) lorsque le moyen de détermination (40) détermine que le véhicule (50) a commencé à se déplacer.

2. Dispositif d'épuration des gaz d'échappement selon la revendication 1, **caractérisé en ce que** le moyen d'augmentation de température (40) augmente la température du pot catalytique (20, 22) lorsque le véhicule (50) commence à se déplacer à la condition que la température du pot catalytique (20, 22) soit inférieure à une température prédéterminée (S130, S330).

3. Dispositif d'épuration des gaz d'échappement selon l'une quelconque des revendications précédentes, **caractérisé en ce que** le moyen d'augmentation de température (40) détermine la détérioration du pot catalytique (20, 22) et établit une période d'augmentation de température, pendant laquelle la température du pot catalytique (20, 22) est accrue, en conformité avec la détérioration.

4. Dispositif d'épuration des gaz d'échappement selon la revendication 3, **caractérisé en ce que** le moyen d'augmentation de température (40) détermine la détérioration du pot catalytique (20, 22) sur la base de la distance totale parcourue du véhicule (50).

5. Dispositif d'épuration des gaz d'échappement selon l'une quelconque des revendications précédentes, **caractérisé en ce que** le moyen d'augmentation de température (40) augmente la température du pot catalytique (20, 22) en commutant un mode de combustion du moteur (10) de la combustion pauvre à la combustion stoïchiométrique (S230).

6. Procédé pour épurer les gaz d'échappement produits par un moteur d'automobile (10) qui effectue la combustion pauvre avec un pot catalytique (20, 22) placé dans un passage d'échappement (18) du moteur (10), le procédé étant **caractérisé par** les étapes consistant à :
déterminer si oui ou non le véhicule (50) a commencé à se déplacer ; et
augmenter la température du pot catalytique (20, 22) lorsque le véhicule (50) est déterminé avoir commencé à se déplacer dans l'étape de détermination.
